# EUROPÄISCHE PATENTANMELDUNG

(11) **EP 1 623 870 A2**
(43) Veröffentlichungstag der Anmeldung: **08.02.2006**
(21) Anmeldenummer: 05016187.6
(22) Anmeldetag: 26.07.2005
(51) Int. Cl.: B60N 2/30, B60N 2/36, B60R 5/04, B60R 21/02

(54) **Laderaumabtrennung**

(30) Priorität: 03.08.2004 DE 102004037800
(71) Anmelder: Intier Automotive Eybl (Germany) GmbH, 92442 Wackersdorf (DE)
(72) Erfinder: Wagner, Josef, 81373 München (DE); Uhlenbrock, Christopher, 85452 Moosinning (DE); Kuhn, Roland, 85567 Grafing (DE)

(57) **Zusammenfassung**

Es wird eine Laderaumabtrennung 3 für ein Kraftfahrzeug und insbesondere einen Kombinations-Personenkraftwagen vorgeschlagen mit einem ersten und einem zweiten plattenförmigen Element 31, 32, wobei das erste plattenförmige Element 31 um eine im wesentlichen horizontale Achse 33 verschwenkbar an der Rückenlehne 22 eines Rücksitzes 2 oder einer Rücksitzbank angeordnet ist und die plattenförmigen Elemente 31, 32 miteinander verrastbar und/oder eingeschränkt gegeneinander bewegbar verbunden sind.

Ferner wird eine Laderaumabtrennung vorgeschlagen, bei der eines der plattenförmigen Elemente im wesentlichen senkrecht und in horizontaler Richtung entlang eines Abschnitts des Laderaums verschiebbar angeordnet ist.

## Beschreibung

Die vorliegende Erfindung betrifft eine Laderaumabtrennung für den Laderaum eines Fahrzeugs und insbesondere eines Kombinations-Personenkraftwagens.

Es ist aus der EP 1 283 130 A2 bekannt, in einem Kombinations-Personenkraftwagen hinter der Rücksitzreihe oder Rücksitzbank mehrere Abdeckungen als Laderaumabtrennung anzubringen. Diese verhindern im Falle eines Bremsmanövers oder eines Zusammenpralls mit einem Hindernis, dass Gepäckstücke aus dem Laderaum in den Bereich der Fahrgäste geschleudert werden. Nach dem Stand der Technik sind mehrere Abdeckungen erforderlich, um den verschiedenen Benutzungsarten eines Kombinations-Personenkraftwagen entsprechen zu können. Wenn der Laderaum nicht oder nur wenig gefüllt ist, genügt eine horizontale Abdeckung auf der Höhe der Oberkante der Lehne der Rücksitze oder der Rücksitzbank. Diese Art der Abdeckung beeinträchtigt die Sicht des Fahrers durch die Heckscheibe nicht. Falls der Laderaum oberhalb der Oberkante der Lehne der Rücksitze oder Rücksitzbank genutzt wird, ist es zweckmäßig, in geringem Abstand hinter der Lehne der Rücksitze oder Rücksitzbank eine vertikale, sich in der gesamten Fahrzeugbreite bis zum Dachhimmel erstreckende Abtrennung vorzusehen. Diese Abtrennung ist als Netz oder ein vergleichbares durchsichtiges Flächengewirke ausgestaltet. Je nach Anwendung lässt sich die nicht benötigte Abdeckung der Laderaumabtrennung in aufgerolltem Zustand verstauen.

Diese und vergleichbare bekannte Laderaumabtrennungen für den Laderaum eines Kombinations-Personenkraftwagens haben den Nachteil gemeinsam, dass sie nicht oder nur nach einem aufwändigen Umbau für die Abtrennung des durch Umlegen der Rückenlehne der Rücksitze oder der Rücksitzbank erweiterten Laderaums geeignet sind.

Die vorliegende Erfindung stellt sich daher die Aufgabe, eine Laderaumabtrennung zu schaffen, die besonders einfach an die verschiedenen Nutzungsweisen in einem Kombinations-Personenkraftwagen anpassbar ist.

Diese Aufgabe wird unter einem ersten Aspekt gelöst durch eine Laderaumabtrennung mit den Merkmalen des Anspruch 1. Unter einem weiteren Aspekt wird diese Aufgabe gelöst durch eine Laderaumabtrennung mit den Merkmalen des Anspruch 3. Unter noch einem weiteren Aspekt wird diese Aufgabe gelöst durch eine Laderaumabtrennung mit den Merkmalen des Anspruch 11.

Jede der erfindungsgemäßen Laderaumabtrennungen weist eine hohe mechanische Stabilität auf, die mit den bekannten einfachen Netzen ohne weiteres nicht zu erzielen ist. Zudem kann jede erfindungsgemäße Laderaumabtrennung mehrere Anordnungen einnehmen und wird dadurch sämtlichen Benutzungsweisen eines Kombinations-Personenkraftwagens gerecht. Bei Nichtgebrauch lässt sich jede der erfindungsgemäßen Laderaumabtrennungen auf kleinem Raum verstauen.

Bevorzugte Ausführungsformen der vorliegenden Erfindung werden nachfolgend mit Bezug auf die beigefügten Zeichnungen erläutert. Darin zeigen:
- Fig. 1: eine Schnittansicht durch einen Kombinations-Personenkraftwagen mit einer ersten Ausführungsform der erfindungsgemäßen Laderaumabtrennung in einer möglichen Anordnung;
- Fig. 2: die Situation gemäß Fig. 1, wobei sich die Laderaumabtrennung in einer anderen Anordnung befindet;
- Fig. 3: die Situation gemäß Fig. 1, wobei sich die Laderaumabtrennung in noch einer anderen Anordnung befindet;
- Fig. 4: die Situation gemäß Fig. 1, wobei sich die Laderaumabtrennung in noch einer anderen Anordnung befindet;
- Fig. 5: eine Schnittansicht durch einen Kombinations-Personenkraftwagen mit einer zweiten Ausführungsform der erfindungsgemäßen Laderaumabtrennung in einer möglichen Anordnung; und
- Fig. 6: die Situation gemäß Fig. 5, wobei sich die Laderaumabtrennung in einer anderen Anordnung befindet.

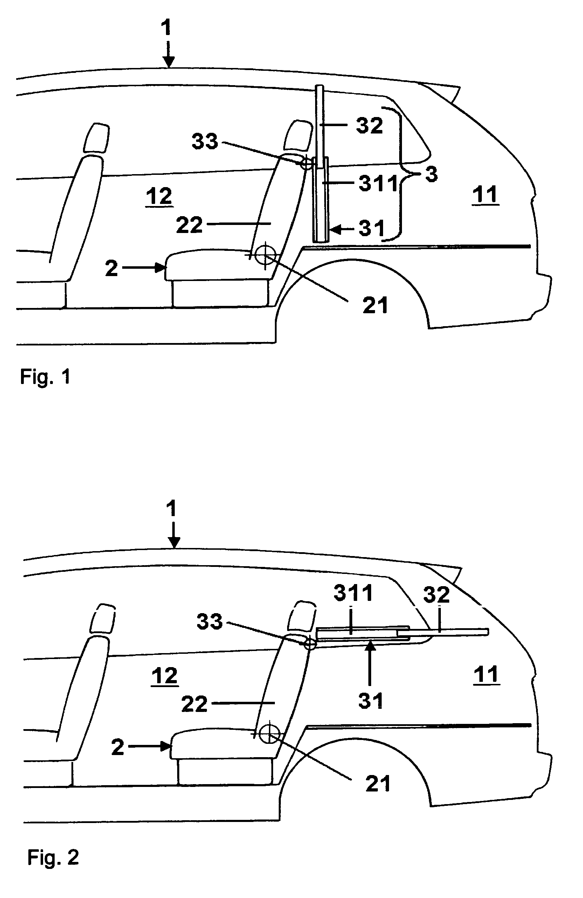

Ein Kombinations-Personenkraftwagen 1 weist gemäß Fig. 1 bis 4 im hinteren Bereich einen Laderaum 11 zur Unterbringung von Ladegut auf. Vor dem Laderaum 11 befindet sich ein weiterer Raum 12, der vorgesehen ist, entweder Personen oder Ladegut aufzunehmen. In diesem weiteren Raum 12 ist als Teil der Fahrzeugausstattung ein Rücksitz oder eine Rücksitzbank 2 enthalten. Der Rücksitz oder die Rücksitzbank 2 weist eine um die Achse 21 schwenkbare Rückenlehne 22 auf.

Weiterhin umfasst die Fahrzeugausstattung erfindungsgemäß eine erste Ausführungsform einer Laderaumabtrennung 3 mit einem ersten 31 und einem zweiten 32 plattenförmigen Element. Das erste plattenförmige Element 31 ist um eine horizontale Achse 33 verschwenkbar an einem oberen Abschnitt der Rückenlehne 22 gehalten. Es sind Mittel vorgesehen, die plattenförmigen Elemente 31, 32 gegeneinander bewegbar und insbesondere verschiebbar zu halten. Besonders zweckmäßig wird dies erreicht durch eine in dem ersten plattenförmigen Element 31 vorgesehene Tasche 311 zur verschiebbaren Aufnahme des zweiten plattenförmigen Elements 32. Das zweite plattenförmige Element 32 gleitet in dieser dargestellten Ausführungsform abschnittsweise in Führungen im Inneren der Tasche 311. Hierbei ist es zudem sinnvoll, die Bewegbarkeit der plattenförmigen Elemente 31, 32 gegeneinander durch Endanschläge oder dergleichen einzuschränken, um ein ungewolltes Herausfallen des zweiten plattenförmigen Elements 32 aus der Tasche 311 zu verhindern. Falls die Möglichkeit der Entnahme des zweiten plattenförmigen Elements 32 aus der Tasche 311 gewünscht ist, können besondere, durch Benutzereingriff lösbar ausgestaltete Endanschläge vorgesehen sein. Die Verschiebemöglichkeit sieht vor, dass das zweite plattenförmige Element 32 in jeweils einer seiner Lagen über jede der quer zum Verschiebeweg liegenden Längskanten über das erste plattenförmige Element 31 wesentlich vorsteht. Dies wird in der gezeigten Ausführungsform auf besonders einfache Weise dadurch erreicht, dass die Tasche 311 durch das erste plattenförmige Element 31 hindurch verläuft und an dessen beiden gegenüberliegenden Kanten austritt.

Gemäß Fig. 1 ist bei einer Nutzung des gesamten Laderaums 11 das erste plattenförmige Element 31 der Laderaumabtrennung 3 nach unten in eine annähernd senkrechte Lage hinter der Rückenlehne 22 geklappt. Das zweite plattenförmige Element 32 ragt aus der Tasche an der oben liegenden Kante des ersten plattenförmigen Elements 31 so weit heraus, dass es den Durchtritt zwischen dem Laderaum 11 und dem weiteren Raum 12 weitgehend verschließt. Auf diese Art können auch bei einer umfassenden Nutzung des Laderaums 11 keine darin untergebrachten Gegenstände in der Folge eines Aufpralls des Fahrzeugs anf ein Hindernis in den Bereich der Fahrgäste gelangen.

Wenn gemäß Fig. 2 der Laderaum 11 nur in einem geringeren Umfang, nämlich nur in etwa hinsichtlich des unterhalb der Oberkante der Rücksitzlehne 22 liegenden Abschnitts genutzt wird, ist das erste plattenförmige Element 31 in eine im wesentlichen horizontale Lage über einen vorderen Teil des nutzbaren Laderaums 11 geschwenkt. Das zweite plattenförmige Element 32 ist aus der Tasche 311 über deren von der Rücksitzlehne abgewandte Öffnung ausgezogen und bedeckt einen hinteren Teil des nutzbaren Laderaums 11 im Bereich der Heckklappe. Bei dieser Anordnung der ersten Ausführungsform der Laderaumabtrennung 3 wird die Sicht des Fahrers nach hinten nicht durch das nach oben ragende zweite plattenförmige Element 32 beeinträchtigt.

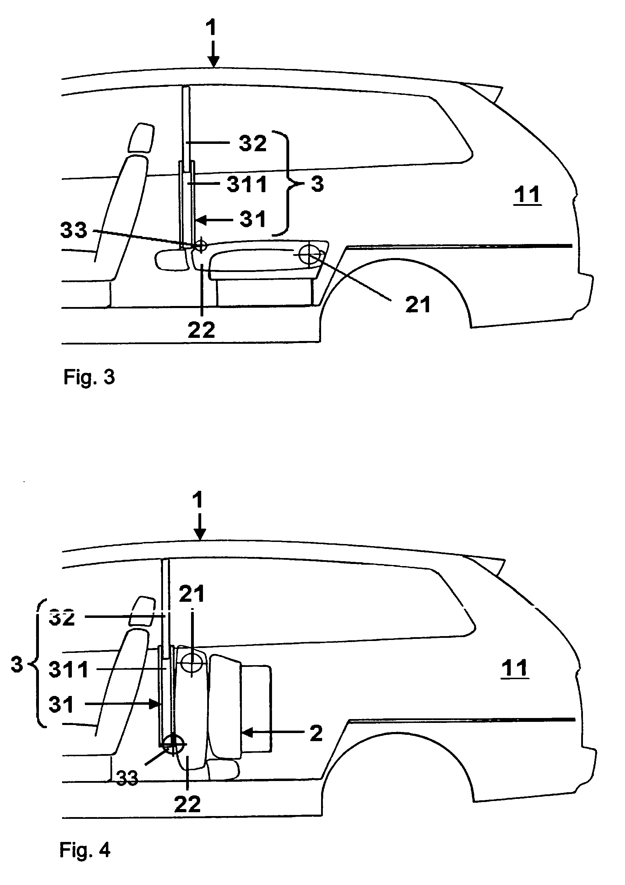

Wenn hingegen gemäß Fig. 3 der gesamte Laderaum 11 und zusätzlich der weitere Raum 12 zur Unterbringung von Ladegut nutzbar gemacht ist, liegt die Rückenlehne 22 des Rücksitzes oder der Rücksitzbank 2 nach vorne auf die Sitzfläche abgeklappt auf. Die Rückseite der Rückenlehne 22 schließt sich vorzugsweise in einer Ebene an den Bodenbereich des Laderaums 11 an. Dadurch wird das Beladen des Kombinations-Personenkraftwagen erleichtert. Die Laderaumabtrennung 3 ist gegenüber der Rückenlehne 22 im wesentlichen senkrecht nach oben aufgerichtet. Dabei ist das zweite plattenförmige Element 32 im wesentlich in der selben Lage bezogen auf das erste plattenförmige Element 31, wie in der zuvor mit Bezug auf Fig. 2 beschriebenen Konfiguration. Im Fall eines Frontalaufpralls oder eines heftigen Bremsvorgangs wird die Laderaumabtrennung 3 in dieser Anordnung verhindern, dass Ladegut in den Fahrgastbereich geschleudert wird.

In einer anderen Ausführungsart eines Kombinations-Personenkraftwagen gemäß Fig. 4 ist bei einer Nutzung von Gepäckraum 11 und weiterem Raum 12 der Rücksitz oder die Rücksitzbank 2 zusammengelegt und nach vorne geklappt. Sitzfläche und Rückenlehne 22 stehen im wesentlichen senkrecht und sind aneinandergelegt. Die Laderaumabtrennung 3 ist hierbei bezogen auf den Kombinations-Personenkraftwagen in einer Anordnung, die der vorstehend mit Bezug auf Fig. 3 beschriebenen ähnlich ist. Beide plattenförmigen Elemente 31, 32 ragen im wesentlichen von der horizontalen Drehachse 33 im Bereich der Rückenlehne 22 aufwärts. Das zweite plattenförmige Element 32 ist in Bezug auf das erste 31 so weit verschoben, dass der zwischen dem weiteren Raum 12 und dem Fahrgastbereich vorhandene Durchtritt weitgehend verschlossen ist.

Jedes der plattenförmigen Elemente 31, 32 kann beispielsweise aus einer steifen Kunststoff-, Holz-, oder Metallplatte hergestellt sein. Um rückwärtige die Sicht des Fahrers möglichst wenig zu beeinträchtigen, wird wenigstens das zweite plattenförmige Element 32 mit einem Sichtfenster oder dergleichen versehen sein. Das Sichtfenster kann durch eine Scheibe aus durchsichtigem Kunststoff, Sicherheitsglas oder durch ein Netz gegen den Durchtritt von Ladegut verschlossen sein. In einer besonders einfachen und leichten Ausführung kann jedes der plattenförmigen Elemente 31, 32 als eine stabiler Rahmen ausgeführt sein, in den ein Netz oder ein ähnliches durchsichtiges Flächengewirke eingespannt ist.

In einer weiteren Ausgestaltung weist eines der plattenförmigen Elemente 31, 32 eine verschließbare Öffnung auf zum Durchladen von langen Gegenständen, insbesondere von Ski und Skistöcken. Hinsichtlich der Ladesituation gemäß den Fig. 2 und 3 ist es besonders zweckmäßig, das erste plattenförmige Element 31 mit der vorgeschlagenen verschließbaren Öffnung auszustatten.

Für die Verwendung der Laderaumabtrennung 3 in Fahrzeugen mit geteilter Rücksitzbank oder mit mehreren Rücksitzen 2 kann auch eine entsprechende vertikale Teilung der Laderaumabtrennung 3 in Fahrzeuglängsrichtung vorgesehen sein. Alternativ kann auch die Laderaumabtrennung 3 an nur einem Teil der Rückenlehne 21 der Rücksitzbank 2 oder an nur einer von mehreren Rückenlehnen verschwenkbar angebracht sein. Dies würde es erlauben, den anderen Teil der Rückenlehne 22 oder die anderen Rückenlehnen nach vorne umzulegen, wobei jedoch die Laderaumabtrennung 3 wahlweise in einer der Anordnungen gemäß Fig. 1 und 2 verbleiben könnte.

In einer alternativen Ausgestaltung der ersten Ausführungsform der Laderaumabtrennung 3 ist die bewegliche Verbindung zwischen den zwei plattenförmigen Elementen 31, 32 als Schwenkverbindung ausgestaltet. In diesem Fall kann insbesondere ein Gelenk mit einem eingeschränkten Schwenkwinkel, z.B. einem Halbkreis, vorgesehen werden, das in beiden Endlagen verriegelbar ist.

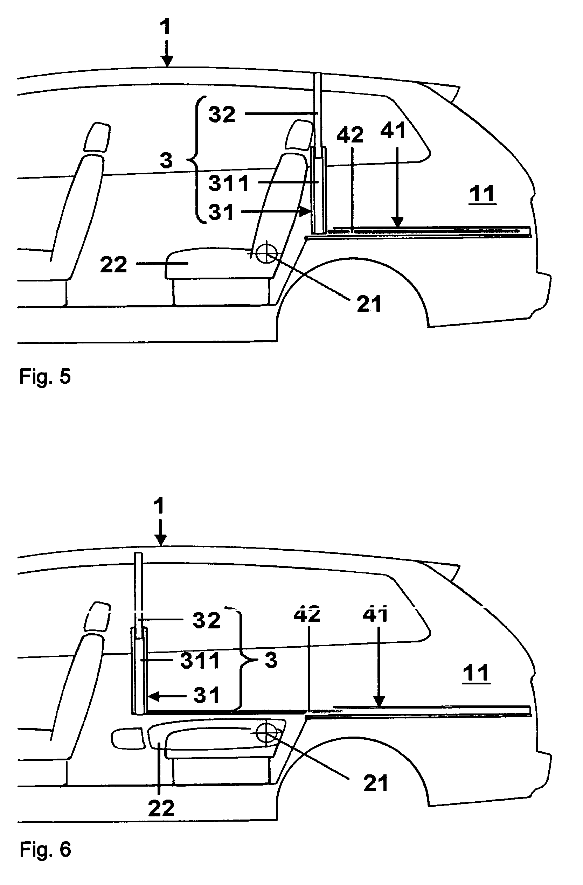

In einer zweiten Ausführungsform der vorliegenden Erfindung gemäß den Fig. 5 und 6 enthält der Laderaum 11 einen Ladeboden 41 als feststehenden Teil der Bodenauskleidung. Ein bewegbarer Teil der Bodenauskleidung 42 ist vorzugsweise verschiebbar in einer Tasche oder Aussparung der festen Bodenauskleidung 41 unterbringbar angeordnet. Der bewegbare Teil der Bodenauskleidung 42 ist dabei vorzugsweise geradlinig nach vorne in Richtung des weiteren Raums 12 verschiebbar. In einem vorderen Abschnitt ist an dem bewegbaren Teil der Bodenauskleidung 42 eine Laderaumabtrennung 3 angebracht. Diese umfasst ein erstes plattenförmiges Element 31, das sich im wesentlichen senkrecht nach oben von der Ebene der veränderlichen Bodenauskleidung 42 bis in den Bereich der Oberkante der Rückenlehne 22 der Rücksitze oder der Rücksitzbank 2 erstreckt. An dem ersten plattenförmigen Element 31 bewegbar und/oder lösbar angeordnet ist ein zweites plattenförmiges Element 32. Dieses weist einen oberen Abschnitt auf, der vorgesehen ist, den zwischen der Oberkante des ersten plattenförmigen Elements 31 und dem Fahrzeughimmel verbleibenden Durchtritt zu verschließen. Ein weiterer Abschnitt an dem zweiten plattenförmigen Element 32 ist dazu vorgesehen, eine Verbindung zu dem ersten plattenförmigen Element 31 zu vermitteln. Vorzugsweise wird das zweite plattenförmige Element 32 wie in der zuvor beschriebenen Ausführungsform der vorliegenden Erfindung gegenüber dem ersten verschiebbar gehalten sein. Diese Halterung kann insbesondere so ausgestaltet sein, dass das zweite plattenförmige Element 32 bei Bedarf aus der Halterung lösbar ist. Das zweite plattenförmige Element 32 kann vorzugsweise in einer jedenfalls einseitig offenen Tasche in dem ersten plattenförmigen Element 31 verschiebbar angeordnet und in einer Lage darin vollständig unterbringbar sein.

Bei ausschließlicher Nutzung des Laderaums 11 ist gemäß Fig. 5 die Rückenlehne 21 der Rücksitze oder der Rücksitzbank 2 nicht umgelegt. Der bewegbare Teil der Bodenauskleidung 42 befindet sich dann in einer Lage, in der er nicht in den weiteren Raum 12 hineinragt. Entsprechend dem Umfang der Nutzung des Laderaums 11 wird das zweite plattenförmige Element 32 wie dargestellt eingeschoben, ausgezogen oder einer Lage zwischen beiden Endstellungen sein.

Wenn hingegen zur Beförderung des Ladeguts auch der weitere Raum 11 benötigt wird, ist die Rückenlehne 21 der Rücksitze oder der Rücksitzbank nach vorne gemäß Fig. 6 umgelegt. Zur Nutzung des gesamten Raums ragt das veränderliche Bodenauskleidungsteil 42 weit nach vorne bis über die umgelegte Rückenlehne 21. Das zweite plattenförmige Element 32 wird hierbei in der Regel zum Verschließen jeglichen Durchtritts vom genutzten Stauraum 11, 12 nach vorne in seine obere Lage verschoben sein.

Alternativ kann auch in der vorbeschriebenen Ausführungsform das zweite plattenförmige Element 32 an dem ersten 31 schwenkbar gehalten sein. Vorzugsweise wird ein Gelenk mit einer im wesentlichen horizontalen Schwenkachse einen oberen Bereich des ersten plattenförmigen Elements 31 mit einer Kante oder einem zu einer Kante benachbarten Abschnitt des zweiten plattenförmigen Elements 32 verbinden. Das Gelenk kann dabei eine Sperre umfassen, die lediglich einen Schwenkwinkel von einem Halbkreis erlaubt. In den beiden Endlagen wird das Gelenk vorzugsweise verriegelbar sein.

## Patentansprüche

1. Laderaumabtrennung (3) mit zwei plattenförmigen Elementen (31, 32), wobei eines der plattenförmigen Elemente (31) um eine im wesentlichen horizontale Achse (22) verschwenkbar an der Rückenlehne (21) eines Rücksitzes (2) oder einer Rücksitzbank angeordnet ist und die plattenförmigen Elemente (31, 32) eingeschränkt relativ zueinander bewegbar verbunden sind.

2. Laderaumabtrennung nach Anspruch 1, wobei die bewegliche Verbindung zwischen den plattenförmigen Elementen (31, 32) lösbar ist.

3. Laderaumabtrennung (3) mit zwei plattenförmigen Elementen (31, 32), wobei eines der plattenförmigen Elemente (31) um eine im wesentlichen horizontale Achse (22) verschwenkbar an der Rückenlehne (21) eines Rücksitzes (2) oder einer Rücksitzbank angeordnet ist und die plattenförmigen Elemente (31, 32) zu einem festen Bauteil verrastbar sind.

4. Laderaumabtrennung nach Anspruch 1 oder 2, wobei die plattenförmigen Elemente (31, 32) verschwenkbar miteinander verbunden sind.

5. Laderaumabtrennung (3) nach Anspruch 1, 2 oder 4 wobei die plattenförmigen Elemente (31, 32) zwei Lagen relativ zueinander einnehmen können, in denen sie im wesentlichen parallel und abschnittsweise benachbart verlaufen.

6. Laderaumabtrennung (3) nach einem der Ansprüche 1 bis 5, wobei die Lage der Achse (22) in Bezug auf das erste plattenförmige Element (31) festgelegt ist.

7. Laderaumabtrennung (3) nach einem der Ansprüche 1 bis 5, wobei die Lage der Achse (22) in Bezug auf das erste plattenförmige Element (31) veränderbar ist.

8. Laderaumabtrennung (3) nach einem der Ansprüche 1, 2 und 5 bis 7 in Rückbeziehung auf die Ansprüche 1 oder 2, wobei die plattenförmigen Elemente (31, 32) durch eine Gleitführung gegeneinander verschiebbar verbunden sind.

9. Laderaumabtrennung (3) nach Anspruch 8, wobei die Gleitführung eine im wesentlichen geradlinige Bewegung der plattenförmigen Elemente (31, 32) erzwingt.

10. Laderaumabtrennung (3) nach einem der vorangehenden Ansprüche, wobei eines der plattenförmigen Elemente (32) in eine Tasche (311) oder Mulde in dem anderen plattenförmigen Element (31) bewegbar ist.

11. Laderaumabtrennung (3) mit zwei plattenförmigen Elementen (31, 32), wobei eines der plattenförmigen Elemente (31) im wesentlichen senkrecht und in horizontaler Richtung entlang eines Abschnitts des Laderaums verschiebbar angeordnet ist.

12. Laderaumabtrennung nach Anspruch 11, wobei das erste plattenförmige Element (31) an einem bewegbaren Teil der Bodenauskleidung (41) gehalten ist.

13. Laderaumabtrennung nach Anspruch 11 oder 12, wobei das zweite plattenförmige Element (32) an dem ersten plattenförmigen Element (31) verschiebbar gehalten ist.

14. Laderaumabtrennung nach Anspruch 11 oder 12, wobei das weitere plattenförmige Element (32) an dem ersten plattenförmigen Element (31) verschwenkbar gehalten ist.

15. Laderaumabtrennung nach Anspruch 13, wobei das zweite plattenförmige Element (32) in einer Tasche (311) des ersten plattenförmigen Elements (31) verschiebbar gehalten ist.

16. Laderaumabtrennung nach dem Anspruch 12 oder nach einem der Ansprüche 13 bis 15 in Rückbeziehung auf Anspruch 12, wobei der bewegbare Teil der Bodenauskleidung (42) in eine Tasche oder Aussparung unterhalb des Ladebodens (41) des Laderaums (11) bewegbar ist.
